# EUROPÄISCHE PATENTSCHRIFT

(11) **EP 3 174 792 B1**
(45) Veröffentlichungstag und Bekanntmachung des Hinweises auf die Patenterteilung: **29.07.2020**
(21) Anmeldenummer: 15745183.2
(22) Anmeldetag: 29.07.2015
(51) Int. Cl.: B64D 11/06

(54) **FLUGZEUGSITZSYSTEM**
AIRCRAFT SEAT SYSTEM
SYSTÈME DE SIÈGE D'AVION

(30) Priorität: 30.07.2014 DE 102014110819
(43) Veröffentlichungstag der Anmeldung: 07.06.2017
(73) Patentinhaber: Recaro Aircraft Seating GmbH & Co. KG, 74523 Schwäbisch Hall (DE)
(72) Erfinder: CLUCAS, Daniel William, E9 6FS London (GB); ERSAN, Ali, London Greater London E2 0QA (GB)
(74) Vertreter: Daub, Thomas
(86) Internationale Anmeldenummer: PCT/EP2015/067421
(87) Internationale Veröffentlichungsnummer: WO 2016/016326

(56) Entgegenhaltungen:
- EP-A1- 2 733 073
- WO-A1-2006/054104
- DE-A1-102012 020 846
- GB-A- 2 438 162
- US-A1- 2007 152 100

## Beschreibung

### Stand der Technik

Die Erfindung betrifft ein Flugzeugsitzsystem nach dem Oberbegriff des Patentanspruchs 1.

Es ist bereits ein Flugzeugsitzsystem mit wenigstens einem Fluggastsitzbereich, der wenigstens einen Sitzbereich und wenigstens einen Bankbereich aufweist, der in einer, zumindest im Wesentlichen senkrecht zu einer Sitzrichtung ausgerichteten Querrichtung an einer Seite des Sitzbereichs angeordnet ist und eine Bankoberfläche aufweist, die in zumindest einem Betriebszustand mit zumindest einer Sitzbodeneinheit des Sitzbereichs eine Liegefläche ausbildet, vorgeschlagen worden.

US 2007/152100 A1 offenbart ein Flugzeugsitzsystem mit einem Fluggastsitzbereich, welcher einen Sitzbereich und einen Bankbereich aufweist, welcher senkrecht zu einer Sitzrichtung an einer Seite des Sitzbereichs angeordnet ist und eine Bankoberfläche aufweist, welche mit einer Sitzbodeneinheit des Sitzbereichs eine Liegefläche ausbildet. Dabei ist die Sitzbodeneinheit zu dem einen Bankbereich in Sitzrichtung nach hinten versetzt.

DE 10 2012 020846 A1 offenbart ein Flugzeugsitzsystem mit wenigstens einem Fluggastsitzbereich, der wenigstens einen Sitzbereich und wenigstens einen Bankbereich aufweist, der dazu vorgesehen ist, dass ein Passagier während eines Flugs darauf sitzen kann, wobei der Bankbereich in einer, zumindest im Wesentlichen senkrecht zu einer Sitzrichtung ausgerichteten Querrichtung an einer Seite des Sitzbereichs angeordnet ist und eine Bankoberfläche aufweist, die in zumindest einem Betriebszustand mit zumindest einer Sitzbodeneinheit des Sitzbereichs eine Liegefläche ausbildet, wobei einen weiteren Fluggastsitzbereich, der hinter dem einen Fluggastsitzbereich angeordnet ist und ebenfalls einen Sitzbereich ausbildet, der parallel zu der Sitzrichtung hinter dem einen Bankbereich angeordnet ist.

EP 2 733073 A1 offenbart einen Fahrzeugsitz mit einer Sitzeinheit und einer Bankeinheit, wobei Bankeinheit in einer senkrecht zu einer Sitzeinheitenlängsrichtung ausgerichteten Querrichtung an einer Seite der Sitzeinheit angeordnet ist. Die Bankeinheit weist in zumindest einer Sitzstellung einen Bankeinheitenteilbereich auf, der die Sitzeinheit bezüglich der Sitzeinheitenlängsrichtung nach hinten überragt.

WO 2006/054104 A1 offenbart ein Passagiersitzbett mit einer Sitzeinheit, welche einen Sitzbereich und eine Rückenlehne aufweist und ein angrenzendes Möbelstück mit einer oberen Oberfläche, wobei eine Schlafkonfiguration des Sitzbetts, der Sitzbereich des Sitzes und die obere Oberfläche des angrenzenden Möbelstücks eine im Wesentlichen ebene Schlaffläche ausbilden.

Die Aufgabe der Erfindung besteht insbesondere darin, eine gattungsgemäße Vorrichtung mit verbesserten Eigenschaften hinsichtlich eines Komforts und einer Privatsphäre für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Flugzeugsitzsystem mit wenigstens einem Fluggastsitzbereich, der wenigstens einen Sitzbereich und wenigstens einen Bankbereich aufweist, der in einer, zumindest im Wesentlichen senkrecht zu einer Sitzrichtung ausgerichteten Querrichtung an einer Seite des Sitzbereichs angeordnet ist und eine Bankoberfläche aufweist, die in zumindest einem Betriebszustand mit zumindest einer Sitzbodeneinheit des Sitzbereichs eine Liegefläche ausbildet, wobei die Sitzbodeneinheit zu dem zumindest einen Bankbereich in Sitzrichtung nach hinten versetzt ist.

Es wird vorgeschlagen, dass das Flugzeugsitzsystem einen weiteren Fluggastsitzbereich aufweist, der hinter dem einen Fluggastsitzbereich angeordnet ist und ebenfalls einen Sitzbereich ausbildet, der parallel zu der Sitzrichtung hinter dem einen Bankbereich angeordnet ist. Unter einem "Fluggastsitzbereich" soll dabei insbesondere ein Bereich verstanden werden, den eine Person in einer Flugzeugkabine insbesondere während eines Flugs für sich zur Verfügung hat. Dabei weist ein Flugzeugsitzbereich vorzugsweise mehrere Anbauelemente für eine Benutzung durch einen Fluggast auf, wie beispielsweise eine Tischablage, einen Monitor oder Verstaumöglichkeiten. Unter einem "Sitzbereich" soll dabei insbesondere ein Bereich eines Fluggastsitzbereichs verstanden werden, der dazu vorgesehen ist, dass ein Passagier während eines Flugs auf ihm sitzt. Dabei ist der Sitzbereich vorzugsweise von einem Fluggastsitz gebildet. Unter einem "Fluggastsitz" soll dabei insbesondere ein Sitz verstanden werden, der dazu vorgesehen ist, in einer Flugzeugkabine eines Flugzeugs auf einem Kabinenboden aufgeständert zu werden und auf dem ein Passagier während eines Flugs sitzen kann. Dabei weist der Fluggastsitz eine Sitzbodeneinheit und eine mit der Sitzbodeneinheit gekoppelte Rückenlehneneinheit auf, wobei die Rückenlehneneinheit vorzugsweise verschwenkbar mit der Sitzbodeneinheit verbunden ist, wodurch der Fluggastsitz vorzugsweise in unterschiedliche Funktionsstellungen bewegbar ist. Unter einer "Sitzbodeneinheit" soll dabei insbesondere ein Element verstanden werden, das eine Sitzfläche des Fluggastsitzes ausbildet, auf dem der Passagier während eines Flugs sitzt, wobei die Sitzbodeneinheit dabei vorzugsweise wenigstens eine Polstereinheit aufweist, die den Sitzfläche elastisch polstert. Unter einem "Bankbereich" soll erfindungsgemäß ein Bereich des Fluggastsitzbereichs verstanden werden, der dazu vorgesehen ist, dass ein Passagier während eines Flugs darauf sitzen kann und/oder zumindest Teile seines Körpers darauf ablegen kann. Dabei ist der Bankbereich dazu vorgesehen, den Sitzbereich des Fluggastsitzes zu erweitern. Unter einer "Sitzrichtung" soll insbesondere eine Richtung verstanden werden, welche bei einem ordnungsgemäßen Sitzen eines Passagiers, insbesondere bei parallel ausgerichteten Oberschenkeln des Passagiers, im Wesentlichen der Richtung entspricht, in welcher sich die Oberschenkel des Passagiers vom Gesäß bis zum Kniebereich erstrecken. In einer aufrechten Stellung eines Fluggastsitzes, in welcher eine Rückenlehneneinheit zumindest im Wesentlichen senkrecht zu einem Boden ausgerichtet ist, ist die Sitzrichtung parallel zu dem Boden und zumindest im Wesentlichen senkrecht zu der von der Rückenlehneneinheit gebildeten Rückenlehnenfläche ausgerichtet. Unter einer "Querrichtung" soll dabei insbesondere eine orthogonal zu der Sitzrichtung ausgerichtete Richtung verstanden werden, die in einer aufrechten Stellung des Fluggastsitzes, in welcher eine Rückenlehneneinheit zumindest im Wesentlichen senkrecht zu einem Boden ausgerichtet ist, und die von einer Seite des Sitzbereichs in eine gegenüberliegende Seite des Sitzbereiches verläuft. Unter einer "Bankoberfläche" soll dabei insbesondere eine Oberfläche verstanden werden, die von dem Bankbereich bereitgestellt wird, wobei die Bankoberfläche dazu vorgesehen ist, von einem Passagier als Ablage für Gegenstände oder zur Auflage von zumindest Bereichen seines Körpers genutzt zu werden. Unter einer "Liegefläche" soll dabei insbesondere eine Fläche verstanden werden, die dazu vorgesehen ist, dass ein Passagier in ausgestreckter Weise darauf liegen kann. Unter "nach hinten versetzt" soll dabei insbesondere verstanden werden, dass zumindest Teilbereiche, insbesondere ein hinterer Teilbereich der Sitzbodeneinheit, nach hinten, also insbesondere entgegen der Sitzrichtung zu der Bankeinheit versetzt ist, wobei ein hinteres Ende der Bankeinheit im Bezug auf die Sitzrichtung weiter vorne angeordnet ist, als ein hinteres Ende der Sitzbodeneinheit. Unter einem "hinteren Ende der Sitzbodeneinheit" soll dabei insbesondere eine hintere Kante der Sitzbodeneinheit verstanden werden, die, in Sitzrichtung gesehen, am weitesten hinten angeordnet ist. Dabei ist das hintere Ende der Sitzbodeneinheit insbesondere von einer Kante gebildet, an der die Sitzbodeneinheit in die Rückenlehneneinheit übergeht. An dem hinteren Ende der Sitzbodeneinheit erstreckt sich die Rückenlehne nach oben, von einer Aufständereinheit weg. Unter einem "weiteren Fluggastsitzbereich" soll dabei insbesondere ein Fluggastsitzbereich verstanden werden, der für einen weiteren Passagier vorgesehen ist. Der weitere Fluggastsitzbereich ist dabei von dem einen Fluggastsitzbereich abgetrennt. Unter "hinter dem Fluggastsitzbereich angeordnet", soll dabei insbesondere im Bezug auf eine Flugrichtung hinter dem einen Fluggastsitzbereich verstanden werden. Durch eine erfindungsgemäße Ausgestaltung kann vorteilhaft ein Fluggastsitzbereich bereitgestellt werden, der einen sitzenden Passagier vorteilhaft von einem Rest einer Flugzeugkabine abschirmt, wodurch eine besonders vorteilhafte Privatsphäre für einen in dem Fluggastsitzbereich sitzenden Passagier erreicht werden kann. Durch den nach hinten versetzten Sitzbereich schirmt der Rest des Fluggastsitzbereichs den Sitzbereich und damit den Passagier vorteilhaft teilweise von einem Gangbereich ab. Zusätzlich kann ein weiterer Fluggastsitzbereich in eine Flugzeugkabine integriert werden.

Weiter wird vorgeschlagen, dass ein hinteres Ende der Sitzbodeneinheit um wenigstens 100 mm zu einem hinteren Ende des einen Bankbereichs nach hinten versetzt ist. Unter einem "hinteren Ende des Bankbereichs" soll dabei insbesondere eine hintere Kante des Bankbereichs verstanden werden, der, in einer Sitzrichtung gesehen, am weitesten nach hinten über den Sitzbereich übersteht. Dabei ist das hintere Ende des Bankbereichs insbesondere von einer Kante gebildet, an der der Bankbereich in ein Shellelement übergeht. An dem hinteren Ende des Bankbereichs erstreckt sich das Shellelement nach oben, von der Aufständerebene weg. Unter "um wenigstens 100 mm" soll dabei insbesondere um zumindest 100 mm, vorzugsweise um 150 mm und in einer vorteilhaften Ausgestaltung um zumindest 250 mm verstanden werden. Dadurch kann der Sitzbereich besonders gut und weit von einer Gangseite abgegrenzt werden und dadurch kann eine besonders vorteilhafte Privatsphäre für einen sitzenden Passagier erreicht werden.

Zudem wird vorgeschlagen, dass der wenigstens eine Fluggastsitzbereich einen weiteren Bankbereich aufweist, der auf einer dem einen Bankbereich gegenüberliegenden Seite des Sitzbereichs angeordnet ist. Unter einem "weiteren Bankbereich" soll dabei insbesondere ein von dem zumindest einen Bankbereich räumlich getrennter Bankbereich verstanden werden. Dadurch kann vorteilhaft eine besonders große und vorteilhafte Liegefläche für einen Passagier bereitgestellt werden.

Weiterhin wird vorgeschlagen, dass der wenigstens eine Fluggastsitzbereich wenigstens ein schwenkbar angeordnetes Bankelement aufweist, das an einem vorderen Ende der Bankbereiche und des Sitzbereichs angeordnet ist und in einer ausgeklappten Stellung die Liegefläche erweitert. Unter "wenigstens einem Bankelement" soll dabei insbesondere verstanden werden, dass zumindest ein schwenkbar angeordnetes Bankelement in dem Fluggastsitzbereich angeordnet ist, es aber grundsätzlich auch denkbar ist, dass zwei, drei oder mehrere schwenkbar angeordnete Bankelemente in dem Fluggastsitzbereich angeordnet sein können. Dabei können die mehreren Bankelemente unabhängig voneinander verstellt werden, wodurch wahlweise eine komplette Liegefläche, eine kleinere Liegefläche oder insbesondere ein unabhängiger, temporärer, zusätzlicher Sitzplatz bereitgestellt werden kann. Unter einem "schwenkbar angeordneten Bankelement" soll dabei insbesondere ein Element verstanden werden, das zumindest zwischen zwei Stellungen verstellbar ist und eine Bankelementoberfläche aufweist, die in wenigstens einer Stellung parallel und eben zu den Bankoberflächen und der Sitzfläche ausgerichtet ist, um eine ebene Liegefläche auszubilden, wobei das Bankelement dabei zwischen den zumindest zwei verschiedenen Stellungen verschwenkt werden kann. Dabei ist das Bankelement in den beiden Stellungen, zwischen denen es verstellbar ist, jeweils verriegelbar. Dabei ist es grundsätzlich auch denkbar, dass ein Bankelement in verschiedenen Zwischenstellungen arretierbar ist, die zwischen den beiden Stellungen liegen, zwischen denen das Bankelement verstellbar ist. Eine Zwischenstellung könnte dabei beispielsweise von einer Komfortstellung gebildet sein, in der das Bankelement ungefähr einen Winkel von 45 Grad zu der Aufständerebene aufweist. Vorzugsweise ist das Bankelement stufenlos zwischen den beiden Stellungen verstellbar. Dabei ist das schwenkbar angeordnete Bankelement vorzugsweise über eine Scharniervorrichtung mit den Bankbereichen und dem Sitzbereich schwenkbar gekoppelt. Unter einer "ausgeklappten Stellung" soll dabei insbesondere eine Arbeitsstellung des schwenkbaren Bankelements versanden werden, in dem das Bankelement aus seiner eingeklappten Stellung herausbewegt ist, wobei das Bankelement dabei die Liegefläche erweitert und dabei von einem Passagier in der ausgeklappten Stellung genutzt werden kann. Dabei ist das schwenkbare Bankelement in der ausgeklappten Stellung vorzugsweise verrastet, wodurch insbesondere ein unerwünschtes Ausschwenken in die eingeklappte Stellung vermieden werden soll. Unter einer "eingeklappten Stellung" soll dabei insbesondere eine Verstaustellung des schwenkbaren Bankelements verstanden werden, in der das Bankelement an die Bankbereiche und den Sitzbereich angeklappt ist und dabei möglichst wenig Raum einnimmt, wobei das schwenkbare Bankelement in der eingeklappten Stellung die Liegefläche nicht erweitert und von einem Passagier nicht genutzt werden kann. Dabei ist das schwenkbare Bankelement vorzugsweise in der eingeklappten Stellung verrastet, wodurch insbesondere ein unerwünschtes Ausschwenken aus der eingeklappten Stellung vermieden werden soll. Dadurch kann eine für den Passagier bereitgestellte Liegefläche besonders groß ausgebildet werden und in einem Betriebszustand, in dem sie nicht benötigt wird, vorteilhaft mit wenig Platzbedarf verstaut werden.

Es wird weiter vorgeschlagen, dass das wenigstens eine schwenkbar angeordnete Bankelement sich in einer Querrichtung über beide Bankbereiche und den Sitzbereich erstreckt. Unter "über beide Bankbereiche und den Sitzbereich erstrecken" soll dabei insbesondere verstanden werden, dass eine Quererstreckung des schwenkbaren Bankelements im Wesentlichen so groß ist wie eine Qererstreckung der beiden Bankbereiche und des Sitzbereichs zusammen, wobei sich das Bankelement dabei von einer Seite des einen Bankbereichs über den Bankbereich, weiter über den Sitzbereich und dann über den weiteren Bankbereich bis an ein dem Sitzbereich abgewandtes Ende des weiteren Bankbereichs erstreckt. Dadurch kann die Liegefläche besonders vorteilhaft groß ausgebildet werden und eine gesamte Breite der Bankbereiche in Kombination mit dem Sitzbereich genutzt werden.

Ferner wird vorgeschlagen, dass der Fluggastsitzbereich schräg zur Flugrichtung ausgerichtet ist. Unter einer "Flugrichtung" soll dabei insbesondere eine Haupterstreckungsrichtung des Flugzeugs verstanden werden, wobei sich die Flugrichtung von einem Heck des Flugzeugs zu einem Bug des Flugzeugs erstreckt und vorzugsweise koaxial zu einer Mittelachse des Flugzeugs verläuft. Unter "schräg zur Flugrichtung ausgerichtet", soll dabei insbesondere verstanden werden, dass eine Sitzrichtung des Fluggastsitzbereichs einen Winkel zu der Flugrichtung aufweist, der zwischen 10 Grad und 40 Grad, vorzugsweise zwischen 30 Grad und 35 Grad liegt. Dabei ist der Winkel, den die Sitzrichtung des Fluggastsitzbereichs zu der Flugrichtung aufweist, insbesondere von 90 Grad unterschieden. Dadurch kann eine besonders vorteilhafte Aufteilung von Fluggastsitzbereichen in einer Flugzeugkabine erreicht werden.

Weiterhin wird vorgeschlagen, dass der Fluggastsitzbereich wenigstens eine Tischvorrichtung aufweist, die eine eingeklappte und eine ausgeklappte Stellung aufweist, wobei die Tischvorrichtung auch in der eingeklappten Stellung nutzbar ist. Unter einer "Tischvorrichtung" soll dabei insbesondere eine Vorrichtung verstanden werden, die wenigstens eine Tischfläche bereitstellt, auf der ein Passagier in dem Fluggastsitzbereich Dinge ablegen kann. Unter einer "eingeklappten Stellung der Tischvorrichtung" soll dabei insbesondere eine Stellung der Tischvorrichtung verstanden werden, in der die Tischvorrichtung eine minimal mögliche Tischfläche ausbildet und insbesondere einen minimalen Platz in dem Fluggastsitzbereich einnimmt. Unter einer "ausgeklappten Stellung" soll dabei insbesondere eine Stellung der Tischvorrichtung verstanden werden, in der die Tischvorrichtung eine maximal mögliche Tischfläche ausbildet. Dabei weist die Tischvorrichtung vorzugsweise mehrere ausgeklappte Stellungen auf, in der die Tischvorrichtung in unterschiedlichen Positionen zu dem Sitzbereich des Fluggastsitzbereichs ausgerichtet ist. Unter "nutzbar" soll dabei insbesondere verstanden werden, dass Elemente auf der Tischfläche, die die Tischvorrichtung ausbildet, abgelegt werden können. Dadurch kann vorteilhaft eine Tischvorrichtung bereitgestellt werden, die je nach Situation eine größere oder kleinere Tischfläche zur Ablage für den Passagier bereitstellen kann, wodurch insbesondere ein Komfort für den Passagier erhöht werden kann.

Weiter wird vorgeschlagen, dass die Tischvorrichtung eine Quererstreckung aufweist, die größer ist als eine Quererstreckung des Sitzbereichs. Unter einer "Querstreckung" soll dabei insbesondere eine Erstreckung der Tischvorrichtung verstanden werden, die im Wesentlichen orthogonal zu einer Sitzrichtung des Sitzbereichs ausgerichtet ist. Dadurch kann eine besonders vorteilhafte Tischvorrichtung bereitgestellt werden.

Zudem wird vorgeschlagen, dass der Sitzbereich von einem Fluggastsitz gebildet wird, der zwischen zumindest zwei Funktionsstellungen manuell verstellbar ist. Unter einer "Funktionsstellung" soll dabei insbesondere eine Stellung des Fluggastsitzes verstanden werden, in der der Fluggastsitz von einem auf ihm sitzenden Passagier je nach Belieben zum Sitzen eingestellt werden kann. Dabei ist eine erste Funktionsstellung als eine TTL-Position ausgebildet. Unter einer "TTL-Position" soll dabei insbesondere eine aufrechte Position des Fluggastsitzes verstanden werden, die aus Sicherheitsgründen, insbesondere in einer Startphase, in einer Landephase und während Turbulenzen, eingenommen werden muss. Dabei stehen in der TTL-Position die Rückenlehneneinheit des Fluggastsitzes und die Sitzbodeneinheit im Wesentlichen senkrecht aufeinander, vorzugsweise in einem Winkel von zwischen 90 Grad und 105 Grad. Eine zweite Funktionsstellung ist als eine Komfort-Position ausgebildet, in der die Rückenlehneneinheit zu der Sitzbodeneinheit aus der TTL-Position verkippt ist. Dabei kann der Fluggastsitz insbesondere nicht in eine Funktionsstellung gebracht werden, die eine Liegeposition darstellt, in der die Rückenlehneneinheit im Wesentlichen parallel zu der Sitzbodeneinheit ausgebildet ist. Dadurch kann ein Passagier in dem Sitzbereich sitzend vorteilhaft unterschiedliche Sitzpositionen einnehmen, wodurch insbesondere ein Sitzkomfort für den Passagier erhöht wird.

Es wird weiterhin vorgeschlagen, dass der Bankbereich zumindest eine schwenkbare Abdeckung aufweist, die in einem eingeklappten Zustand die Liegefläche teilweise ausbildet, und dass der Fluggastsitzbereich wenigstens einen Stauraum aufweist, der unterhalb des Bankbereichs angeordnet ist und in einem aufgeklappten Zustand der schwenkbaren Abdeckung zugänglich ist. Unter einer "schwenkbaren Abdeckung" soll dabei insbesondere ein schwenkbares Element verstanden werden, das in einem eingeklappten Zustand zur Abdeckung eines anderen Elements, wie insbesondere des Stauraums, vorgesehen ist. Unter einem "Stauraum" soll dabei insbesondere ein Raum verstanden werden, der von einem Passagier zur Aufbewahrung von Gepäck oder anderen Elementen genutzt werden kann. Dadurch kann vorteilhaft und einfach ein Stauraum in dem Flugzeugsitzbereich für den Passagier geschaffen werden.

Weiter wird vorgeschlagen, dass das Flugzeugsitzsystem einen Konsolenbereich aufweist, der dem weiteren Fluggastsitzbereich zugeordnet ist, der in einem Bereich hinter dem einen Bankbereich angeordnet ist. Unter einem "Konsolenbereich" soll dabei insbesondere ein Bereich des Fluggastsitzbereichs verstanden werden, in dem Anbauelemente und Bedienelemente für einen Passagier in dem Fluggastsitzbereich angeordnet sind, wie insbesondere ein Bildschirm, eine Tischvorrichtung oder eine Aufbewahrungsvorrichtung. Dadurch kann der weitere Fluggastsitzbereich besonders vorteilhaft ausgestaltet werden und die beiden Fluggastsitzbereiche können für eine vorteilhafte Aufteilung in der Flugzeugkabine ausgestaltet werden.

Außerdem wird vorgeschlagen, dass der weitere Bankbereich einen Rückenlehnenbereich aufweist, der an eine Rückenlehneneinheit des Sitzbereichs anschließt. Dadurch kann vorteilhaft eine besonders große Fläche bereitgestellt werden, an die sich ein Passagier mit seinem Rücken anlehnen kann.

Zudem wird vorgeschlagen, dass der Rückenlehnenbereich eine schwenkbare Abdeckung aufweist, die in einem ausgeklappten Zustand eine Armlehne ausbildet. Dadurch kann vorteilhaft eine Armlehne für den Passagier bereitgestellt werden.

Weiter wird vorgeschlagen, dass der Rückenlehnenbereich eine schräge Polsterung aufweist, die dem Sitzbereich zugewandt ist. Unter einer "schrägen Polsterung" soll dabei insbesondere eine Polsterung verstanden werden, die in einer Vertikalachse zu dem restlichen Rückenlehnenbereich verschwenkt ist und aus dem restlichen Rückenlehnenbereich nach vorne herausragt. Dadurch kann ein besonders vorteilhafter Rückenlehnenbereich bereitgestellt werden, in dem sich ein Passagier vorteilhaft schräg anlehnen kann.

Weiterhin wird vorgeschlagen, dass das Flugzeugsitzsystem eine gepolsterte Wandung aufweist, die den Fluggastsitzbereich an einer dem Sitzbereich abgewandten Seite des Bankbereichs abschließt. Dadurch kann der Fluggastsitzbereich im Bereich des einen Bankbereichs vorteilhaft abgeschlossen werden.

Das erfindungsgemäße Flugzeugsitzsystem soll hierbei nicht auf die oben beschriebene Anwendung und Ausführungsform beschränkt sein. Insbesondere kann das erfindungsgemäße Flugzeugsitzsystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Draufsicht auf ein erfindungsgemäßes Flugzeugsitzsystem in einem ersten Ausführungsbeispiel mit mehreren Fluggastsitzbereichen,
- Fig. 2: eine schematische Ansicht eines Fluggastsitzbereichs des Flugzeugsitzsystems,
- Fig. 3: eine weitere Ansicht des Fluggastsitzbereichs mit einem Sitzbereich und einer Bankeinheit mit einer schwenkbaren Abdeckung,
- Fig. 4: eine schematische Darstellung eines Teils einer Flugzeugkabine mit dem Flugzeugsitzsystem und mehreren Fluggastsitzbereichen,
- Fig. 5: eine schematische Ansicht eines Fluggastsitzbereichs des Flugzeugsitzsystems in einem zweiten Ausführungsbeispiel,
- Fig. 6: eine schematische Ansicht eines Fluggastsitzbereichs des Flugzeugsitzsystems in einem dritten Ausführungsbeispiel,
- Fig. 7: eine schematische Ansicht eines Fluggastsitzbereichs des Flugzeugsitzsystems in einem vierten Ausführungsbeispiel und
- Fig. 8: eine schematische Ansicht eines Fluggastsitzbereichs des Flugzeugsitzsystems in einem fünften Ausführungsbeispiel.

### Beschreibung der Ausführungsbeispiele

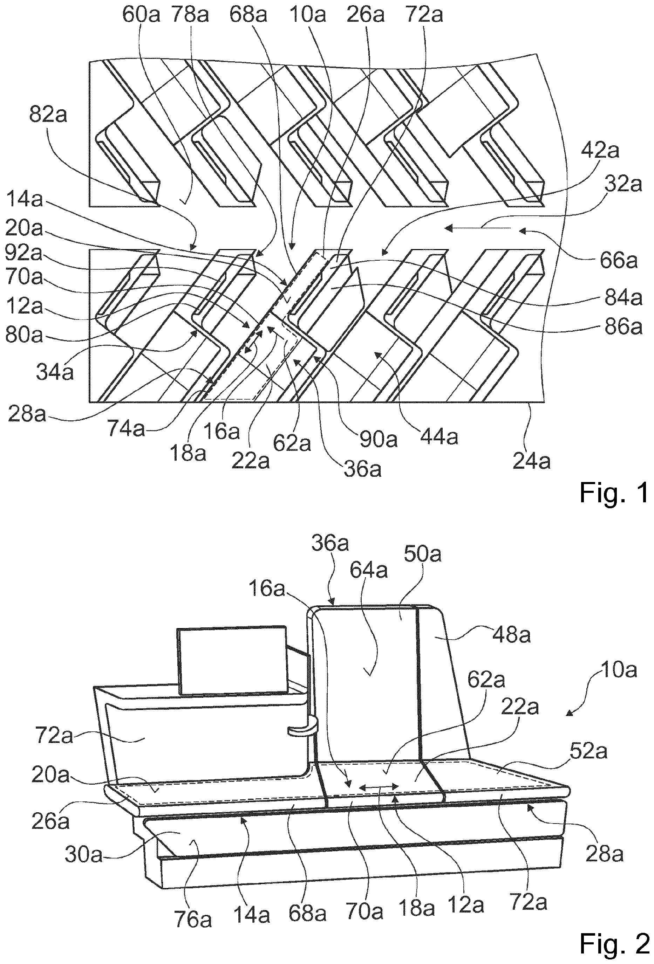

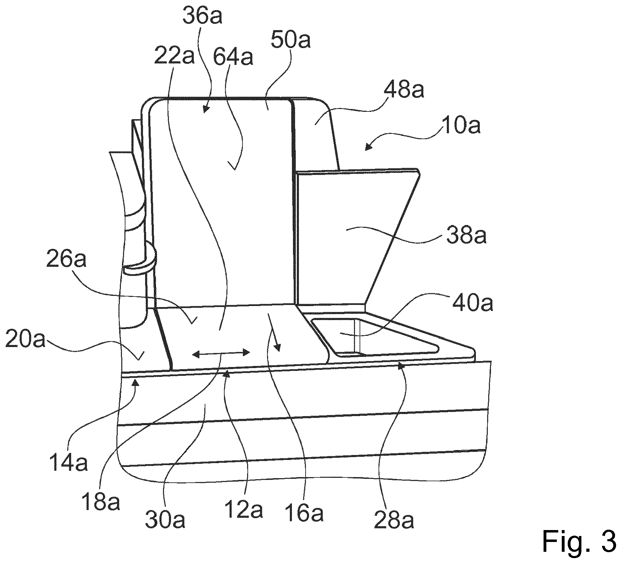

Die Figuren 1 bis 4 zeigen ein erstes Ausführungsbeispiel eines erfindungsgemäßen Flugzeugsitzsystems. Das Flugzeugsitzsystem ist Teil eines nicht näher dargestellten Flugzeugs. Das Flugzeug umfasst eine teilweise dargestellte Flugzeugkabine 24a, in der das Flugzeugsitzsystem angeordnet ist. Die Flugzeugkabine 24a bildet einen Kabinenboden 60a aus. Der Kabinenboden 60a bildet eine Aufständerebene der Flugzeugkabine 24a. Das Flugzeugsitzsystem umfasst einen ersten Fluggastsitzbereich 10a. Der Fluggastsitzbereich 10a ist schräg zu einer Flugrichtung 32a ausgerichtet.

Der erste Fluggastsitzbereich 10a umfasst einen ersten Fluggastsitz 36a. Der Fluggastsitz 36a umfasst eine Sitzbodeneinheit 22a und eine Rückenlehneneinheit 50a. Die Sitzbodeneinheit 22a und die Rückenlehneneinheit 50a sind verschwenkbar miteinander gekoppelt. Dabei ist die Rückenlehneneinheit 50a an einem hinteren Ende der Sitzbodeneinheit 22a angeordnet. Die Rückenlehneneinheit 50a ist dabei im Wesentlichen orthogonal zu der Sitzbodeneinheit 22a angeordnet. Die Sitzbodeneinheit 22a bildet eine Sitzfläche 62a aus. Die Sitzfläche 62a ist dabei gepolstert ausgebildet und dazu vorgesehen, dass ein Fluggast darauf sitzen kann. Die Sitzfläche 62a ist dabei im Wesentlichen parallel zu dem Kabinenboden 60a ausgerichtet. Die Rückenlehneneinheit 50a bildet eine Rückenlehnenfläche 64a aus, an der sich ein auf dem Fluggastsitz 36a sitzender Passagier mit seinem Rücken anlehnen kann. Der Fluggastsitz 36a bildet eine Sitzrichtung 16a aus. Die Sitzrichtung 16a bildet die Richtung aus, in der ein Fluggast normal auf dem Fluggastsitz 36a sitzt. Die Sitzrichtung 16a steht in einer senkrechten Stellung der Rückenlehneneinheit 50a orthogonal auf der Rückenlehnenfläche 64a und ist nach vorne in Richtung der Sitzbodeneinheit 22a gerichtet. Der Fluggastsitz 36a bildet eine Querrichtung 18a aus. Die Querrichtung 18a ist orthogonal zu der Sitzrichtung 16a ausgerichtet. Der Fluggastsitz 36a ist zwischen zwei Funktionsstellungen verschiebbar. Eine erste Funktionsstellung ist als eine TTL-Position ausgebildet. In der als TTL-Position ausgebildeten Funktionsstellung ist der Fluggastsitz 36a in einer aufrechten Stellung. Dabei ist die Rückenlehneneinheit 50a im Wesentlichen senkrecht zu dem Kabinenboden 60a ausgerichtet und die Sitzbodeneinheit 22a ist im Wesentlichen orthogonal zu der Rückenlehneneinheit 50a ausgerichtet. Eine zweite Funktionsstellung ist als eine Komfortstellung ausgebildet, in der die Rückenlehneneinheit 50a aus der im Wesentlichen senkrechten Stellung ausgelenkt ist und schräg zu dem Kabinenboden 60a ausgerichtet ist. Die Sitzbodeneinheit 22a ist dabei ebenfalls zu der im Wesentlichen parallel zu dem Kabinenboden 60a ausgerichteten Stellung ausgelenkt und ist abgewinkelt zu dem Kabinenboden 60a ausgerichtet. Dabei sind die Rückenlehneneinheit 50a und die Sitzbodeneinheit 22a in der als Komfortstellung ausgebildeten Funktionsstellung abgewinkelt zueinander ausgerichtet. Zwischen den beiden Funktionsstellungen ist der Fluggastsitz 36a stufenlos verstellbar. Dabei kann der Fluggastsitz 36a nicht in eine als Liegeposition ausgebildete Funktionsstellung gebracht werden, in der die Sitzbodeneinheit 22a und die Rückenlehneneinheit 50a zusammen eine Liegefläche ausbilden, die in Sitzrichtung 16a ausgerichtet ist.

Der Fluggastsitzbereich 10a weist einen Sitzbereich 12a auf. Der Sitzbereich 12a wird von dem Fluggastsitz 36a gebildet. Die Sitzbodeneinheit 22a des Fluggastsitzes 36a definiert dabei den Sitzbereich 12a der Fluggastsitzbereichs 10a. Der Fluggastsitzbereich 10a weist einen ersten Bankbereich 14a auf. Der erste Bankbereich 14a ist in der senkrecht zur Sitzrichtung 16a ausgerichteten Querrichtung 18a an einer ersten Seite des Sitzbereichs 12a angeordnet. Dabei ist der erste Bankbereich 14a auf einer Seite des Sitzbereichs 12a angeordnet, der einem Flugzeuggang 66a zugewandt ist. Der erste Bankbereich 14a bildet eine Bankoberfläche 20a aus. Die Bankoberfläche 20a ist in der als TTL-Position ausgebildeten Funktionsstellung des Fluggastsitzes 36a eben mit der Sitzfläche 62a der Sitzbodeneinheit 22a ausgebildet. Eine vordere Kante 68a des Bankbereichs 14a ist eben zu einer vorderen Kante 70a des Sitzbereichs 12a ausgebildet. Die vordere Kante 68a des ersten Bankbereichs 14a sowie die vordere Kante 70a des Sitzbereichs 12a sind dabei orthogonal zu der Sitzrichtung 16a in der Querrichtung 18a ausgerichtet. Die Sitzbodeneinheit 22a ist zu dem ersten Bankbereich 14a in Sitzrichtung 16a nach hinten versetzt. Dabei ist ein hinteres Ende der Sitzbodeneinheit 22a zu einem hinteren Ende des Bankbereichs 14a nach hinten versetzt. Das hintere Ende der Sitzbodeneinheit 22a ist in der Sitzrichtung 16a weiter hinten angeordnet als das hintere Ende des ersten Bankbereichs 14a. Die Sitzbodeneinheit 22a weist eine Tiefenerstreckung in Sitzrichtung 16a auf, die größer ist als eine Tiefenerstreckung des ersten Bankbereichs 14a. Der erste Bankbereich 14a ist in Sitzrichtung 16a schmaler ausgebildet als die Sitzbodeneinheit 22a und damit der Sitzbereich 12a des Fluggastsitzbereichs 10a. Dabei ist die Sitzbodeneinheit 22a um 500 mm zu dem ersten Bankbereich 14a nach hinten versetzt. Das hintere Ende der Sitzbodeneinheit 22a ist in Sitzrichtung 16a um 250 mm weiter nach hinten versetzt als das hintere Ende des ersten Bankbereichs 14a. Ein Abstand des hinteren Endes der Sitzbodeneinheit 22a zu seiner vorderen Kante 70a ist, in Sitzrichtung 16a gemessen, um 500 mm größer als ein Abstand des hinteren Endes des ersten Bankbereichs 14a zu seiner vorderen Kante 68a.

Der Fluggastsitzbereich 10a weist ein Shellelement 72a auf. Das Shellelement 72a trennt den Sitzbereich 12a zumindest teilweise von einem Rest der Flugzeugkabine 24a ab. In einem Bereich des ersten Bankbereichs 14a schließt das Shellelement 72a unmittelbar an das hintere Ende des ersten Bankbereichs 14a an und erstreckt sich nach oben. Dabei erstreckt sich das Shellelement 72a in der Querrichtung 18a von einem gangzugewandten Ende des Fluggastsitzbereichs 10a über eine gesamte Breite des ersten Bankbereichs 14a. An einem Übergang von dem ersten Bankbereich 14a zu dem Sitzbereich 12a erstreckt sich das Shellelement 72a nach hinten, bis hinter die Rückenlehneneinheit 50a des Fluggastsitzes 36a. Hinter der Rückenlehneneinheit 50a des Fluggastsitzes 36a erstreckt sich das Shellelement 72a bis an ein gangabgewandtes Ende des Fluggastsitzbereichs 10a. Durch das Shellelement 72a ist der nach hinten versetzte Teil der Sitzbodeneinheit 22a in Richtung des Flugzeuggangs 66a verdeckt. Durch die Abdeckung eines Teils der Sitzbodeneinheit 22a und damit des Sitzbereichs 12a in Richtung des Flugzeuggangs 66a durch das Shellelement 72a kann der Fluggastsitzbereich 10a vorteilhaft zu dem Flugzeuggang 66a abgetrennt werden, wodurch eine vorteilhafte Privatsphäre für einen in dem Fluggastsitzbereich 10a befindlichen Passagier erreicht werden kann.

Der Fluggastsitzbereich 10a weist einen zweiten Bankbereich 28a auf. Der zweite Bankbereich 28a ist auf einer dem ersten Bankbereich 14a gegenüberliegenden Seite des Sitzbereichs 12a bzw. der Sitzbodeneinheit 22a angeordnet. Der zweite Bankbereich 28a weist eine vordere Kante 74a auf, die in einer Flucht mit der vorderen Kante 70a des Sitzbereichs 12a und der vorderen Kante 68a des ersten Bankbereichs 14a verläuft. Der zweite Bankbereich 28a weist eine Tiefenerstreckung auf, die in etwa identisch zu der Tiefenerstreckung des Sitzbereichs 12a ausgebildet ist. Der zweite Bankbereich 28a erstreckt sich in Sitzrichtung 16a von seiner vorderen Kante 74a gleich weit nach hinten wie der Sitzbereich 12a von seiner vorderen Kante 70a. Der zweite Bankbereich 28a erstreckt sich in Querrichtung 18a dabei von dem Sitzbereich 12a aus bis zu dem gangabgewandten Ende des Fluggastsitzbereichs 10a. Der weitere Bankbereich 28a weist einen Rückenlehnenbereich 48a auf. Der Rückenlehnenbereich 48a schließt unmittelbar an die Rückenlehneneinheit 50a des Sitzbereichs 12a an. Die beiden Bankbereiche 14a, 28a bilden zusammen mit der Sitzbodeneinheit 22a des Sitzbereichs 12a eine Liegefläche 26a des Fluggastsitzbereichs 10a aus. Die Liegefläche 26a ist als eine Fläche ausgebildet, auf der ein Passagier in der Querrichtung 18a orientiert liegen kann. Eine Liegerichtung, in der ein Passagier auf der von den Bankbereichen 14a, 28a und dem Sitzbereich 12a gebildeten Liegefläche 26a liegt, ist orthogonal zu der Sitzrichtung 16a ausgerichtet. Dabei kann der Passagier vorzugsweise ausgestreckt auf der Liegefläche 26a gemütlich liegen.

Der Fluggastsitzbereich 10a weist ein schwenkbar angeordnetes Bankelement 30a auf. Das schwenkbar angeordnete Bankelement 30a ist an einem vorderen Ende der Bankbereiche 14a, 28a und des Sitzbereichs 12a angeordnet. Das schwenkbar angeordnete Bankelement 30a schließt unmittelbar an die vorderen Kanten 68a, 70a, 74a der Bankbereiche 14a, 28a und des Sitzbereichs 12a an. Das schwenkbar angeordnete Bankelement 30a ist über eine nicht näher dargestellte Lagervorrichtung an die Bankbereiche 14a, 28a und den Sitzbereich 12a angebunden. Die Lagervorrichtung ist dabei vorzugsweise von mehreren Scharnieren und/oder einer Kinematik ausgebildet. Das schwenkbar angeordnete Bankelement 30a weist einen eingeklappten Zustand und einen ausgeklappten Zustand auf. In dem eingeklappten Zustand ist das Bankelement 30a im Wesentlichen in einer vertikalen Stellung ausgerichtet. Dabei ist das Bankelement 30a an einen vorderen Bereich des Fluggastsitzbereichs 10a angeklappt. Der Fluggastsitzbereich 10a bildet eine Verstauaufnahme aus, in der das Bankelement 30a in dem eingeklappten Zustand platzsparend verstaut ist. In dem eingeklappten Zustand ragt das Bankelement 30a dabei nicht in einen für den Passagier vorgesehenen Bereich des Fluggastsitzbereichs 10a hinein. Das Bankelement 30a ist über eine nicht näher dargestellte Verriegelungsvorrichtung in der eingeklappten Stellung verriegelbar. In der ausgeklappten Stellung ist das Bankelement 30a dazu vorgesehen, die Liegefläche 26a zu vergrößern. In der ausgeklappten Stellung ist das Bankelement 30a eben zu den Bankbereichen 14a, 28a und dem Sitzbereich 12a ausgerichtet. Das Bankelement 30a bildet eine Zusatzoberfläche 76a aus, die in dem ausgeklappten Zustand des Bankelements 30a eben zu den Bankoberflächen 20a der Bankbereiche 14a, 28a und der Sitzfläche 62a ausgerichtet ist. Das Bankelement 30a erweitert mit seiner Zusatzoberfläche 76a die Liegefläche 26a. Das Bankelement 30a ist dabei über die nicht näher dargestellte Verriegelungsvorrichtung in der ausgeklappten Stellung verriegelbar. Durch das schwenkbar angeordnete Bankelement 30a kann ein Passagier die Liegefläche 26a bei Bedarf vergrößern, wobei das Bankelement 30a bei Nichtbenutzung vorteilhaft platzsparend weggeklappt und verstaut werden kann. Das schwenkbar angeordnete Bankelement 30a erstreckt sich dabei in Querrichtung 18a über die beiden Bankbereiche 14a, 28a und den Sitzbereich 12a. Das Bankelement 30a erstreckt sich an den vorderen Kanten 68a, 70a, 74a der Bankbereiche 14a, 28a und des Sitzbereichs 12a von dem gangzugewandten Ende des Fluggastsitzbereichs 10a bis an das gangabgewandte Ende des Fluggastsitzbereichs 10a. Dadurch vergrößert das Bankelement 30a in einem ausgeklappten Zustand die Liegefläche 26a über beide Bankbereiche 14a, 28a und den Sitzbereich 12a.

Der Fluggastsitzbereich 10a umfasst eine Tischvorrichtung 34a. Die Tischvorrichtung 34a ist in einem Konsolenbereich 78a des ersten Fluggastsitzbereichs 10a angeordnet. Der Konsolenbereich 78a des ersten Fluggastsitzbereichs 10a ist dabei von einem Shellelement 80a eines vor dem ersten Fluggastsitzbereich 10a angeordneten weiteren Fluggastsitzbereichs 82a gebildet. Die Tischvorrichtung 34a weist dabei eine Quererstreckung auf, die größer ist als eine Quererstreckung, also eine Erstreckung der Sitzbodeneinheit 22a in der Querrichtung 18a. Die Tischvorrichtung 34a weist eine eingeklappte Stellung und eine ausgeklappte Stellung auf. Dabei ist die Tischvorrichtung 34a sowohl in der ausgeklappten Stellung als auch in der eingeklappten Stellung nutzbar. Die Tischvorrichtung 34a weist eine Grundplatte 84a auf. Die Grundplatte 84a ist starr mit dem Shellelement 80a verbunden. Dabei ist die Grundplatte 84a der Tischvorrichtung 34a immer von einem Passagier benutzbar. Die Grundplatte 84a bildet einen Teil der Tischoberfläche aus, die sowohl in einem eingeklappten Zustand als auch in einem ausgeklappten Zustand der Tischvorrichtung 34a für einen Passagier zugänglich ist. Die Tischvorrichtung 34a weist eine Zusatzplatte 86a auf. Die Zusatzplatte 86a ist beweglich zu der Grundplatte 84a der Tischvorrichtung 34a gelagert. Die Zusatzplatte 86a ist in der eingeklappten Stellung der Tischvorrichtung 34a in einer Ruhestellung und erweitert die Tischoberfläche nicht. In einer ausgeklappten Stellung der Tischvorrichtung 34a ist die Zusatzplatte 86a in einer Funktionsstellung und erweitert die Tischoberfläche. Zwischen der Ruhestellung und der Funktionsstellung ist die Zusatzplatte 86a zu der Grundplatte 84a mittels einer nicht näher dargestellten Kinematik verschwenkbar. Der Fluggastsitzbereich 10a umfasst weiter einen Monitor 92a. Der Monitor 92a ist in dem Konsolenbereich 78a des ersten Fluggastsitzbereichs 10a angeordnet. Dabei ist der Monitor 92a oberhalb der Tischvorrichtung 34a in dem Konsolenbereich 78a angebracht. Der Monitor 92a ist dabei schwenkbar in dem Konsolenbereich 78a angebunden. Dabei kann der Monitor 92a so verschwenkt werden, dass er sowohl von einem in dem Sitzbereich 12a sitzenden Passagier als auch von einem auf der Liegeflache 26a liegenden Passagier problemlos betrachtet werden kann. Dazu kann der Monitor 92a durch Verschwenken im Wesentlichen orthogonal zu der Sitzrichtung 16a ausgerichtet werden oder wahlweise auch im Wesentlichen orthogonal zu der Querrichtung 18a. Dabei ist der Monitor 92a stufenlos verstellbar.

Der zweite Bankbereich 28a weist eine schwenkbare Abdeckung 38a auf. Die schwenkbare Abdeckung ist zwischen einem eingeklappten Zustand und einem aufgeklappten Zustand verschwenkbar. Dazu ist die schwenkbare Abdeckung 38a an einem hinteren Ende über eine nicht näher dargestellte Scharniervorrichtung schwenkbar gelagert. In einem eingeklappten Zustand bildet die schwenkbare Abdeckung 38a die Liegefläche 26a aus, die der zweite Bankbereich 28a bereitstellt. In einem aufgeklappten Zustand ist die schwenkbare Abdeckung 38a mit einem vorderen Ende nach oben geschwenkt. Der Fluggastsitzbereich 10a umfasst weiter einen Stauraum 40a. Der Stauraum 40a ist in einem Bereich unterhalb des zweiten Bankbereichs 28a angeordnet. Der unterhalb des Bankbereichs 28a angeordnete Stauraum 40a ist nach oben hin geöffnet. In dem aufgeklappten Zustand der schwenkbaren Abdeckung 38a ist der Stauraum 40a für einen Passagier von oben zugänglich. So kann ein Passagier in dem Fluggastsitzbereich 10a Utensilien und Handgepäck einfach unter dem Bankbereich 28a in dem Stauraum 40a verstauen.

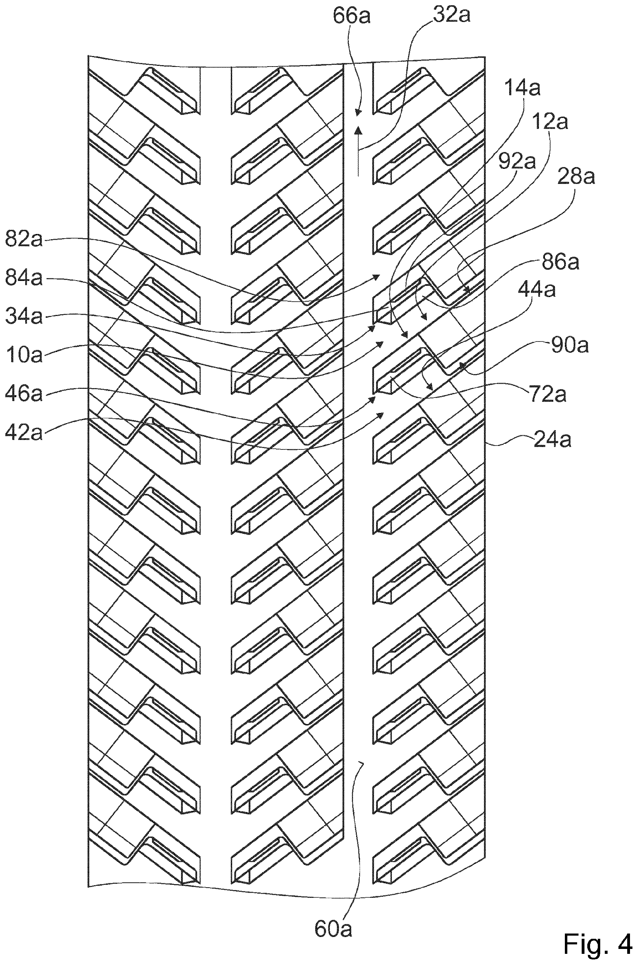

Das Flugzeugsitzsystem umfasst einen weiteren Fluggastsitzbereich 42a. Der weitere Fluggastsitzbereich 42a ist, in Flugrichtung 32a gesehen, hinter dem ersten Fluggastsitzbereich 10a angeordnet. Der weitere Fluggastsitzbereich 42a bildet ebenfalls einen Sitzbereich 44a aus, der parallel zu der Sitzrichtung 16a hinter dem ersten Bankbereich 14a angeordnet ist. Der weitere Fluggastsitzbereich 42a ist im Wesentlichen identisch zu dem ersten Fluggastsitzbereich 10a ausgebildet, weswegen dieser hier nicht näher beschrieben werden soll. Das Flugzeugsitzsystem umfasst einen Konsolenbereich 46a, der dem weiteren Fluggastsitzbereich 42a zugeordnet ist. Der Konsolenbereich 46a ist dabei in einem Bereich unmittelbar hinter dem ersten Bankbereich 14a angeordnet. Dabei ist der Konsolenbereich 46a von dem Shellelement 72a gebildet, das in dem Bereich des ersten Bankbereichs 14a in Sitzrichtung 16a noch vorne ausgeformt ist. Der Konsolenbereich 46a des weiteren Fluggastsitzbereichs 42a ist dabei hinter dem schmalen ersten Bankbereich 14a angeordnet, wodurch eine vorteilhafte Verschachtelung der Fluggastsitzbereiche 10a, 42a erreicht werden kann und die Fluggastsitzbereiche 10a, 42a vorteilhaft nahe aneinander aufgeständert werden können, wodurch eine besonders vorteilhafte Packungsdichte der Fluggastsitzbereiche 10a, 42a erreicht werden kann. Das Flugzeugsitzsystem umfasst weiter einen Stauraum 90a, der ebenfalls dem weiteren Fluggastsitzbereich 42a zugeordnet ist. In dem Stauraum 90a kann ein Passagier, der in dem weiteren Fluggastsitzbereich 42a reist, Reiseutensilien, wie beispielsweise Handgepäck oder kleinere Dinge, wie beispielsweise einen Laptop oder ein Handy, reisesicher unterbringen. Der Stauraum 90a weist dabei eine nicht näher dargestellte Abdeckung auf, mit der der Stauraum 90a nach außen hin verschlossen werden kann. In Figur 4 ist eine Flugzeugkabine 24a mit einem Flugzeugsitzsystem mit mehreren Fluggastsitzbereichen 10a, 42a dargestellt. Dabei sind in einer Sitzreihe quer zu der Flugrichtung 32a jeweils drei Fluggastsitzbereiche 10a, 42a angeordnet. Eine erste Reihe von Fluggastsitzbereichen 10a, 42a ist auf einer ersten Seite der Flugzeugkabine 24a angeordnet. Durch einen Gangbereich getrennt von der ersten Reihe von Fluggastsitzbereichen 10a, 42a ist eine zweite Reihe von nicht näher bezeichneten Fluggastsitzbereichen angeordnet. Die zweite Reihe von Fluggastsitzbereichen ist mittig in der Flugzeugkabine 24a angeordnet und bildet eine Mittelreihe aus. Durch einen Gangbereich getrennt von der zweiten Reihe von Fluggastsitzbereichen ist eine dritte Reihe von nicht näher bezeichneten Fluggastsitzbereichen an einer zweiten Seite der Flugzeugkabine 24a angeordnet. Die nicht näher bezeichneten Fluggastsitzbereiche der zweiten und dritten Reihe sind dabei im Wesentlichen gleich ausgebildet wie die Fluggastsitzbereiche 10a, 42a der ersten Reihe. Grundsätzlich wäre es auch denkbar, dass die mittlere dritte Reihe von jeweils zwei nebeneinander angeordneten Fluggastsitzbereichen ausgebildet ist und so eine Herringbone-Anordnung der Fluggastsitzbereiche 10a, 42a in der Flugzeugkabine 24a erreicht wird.

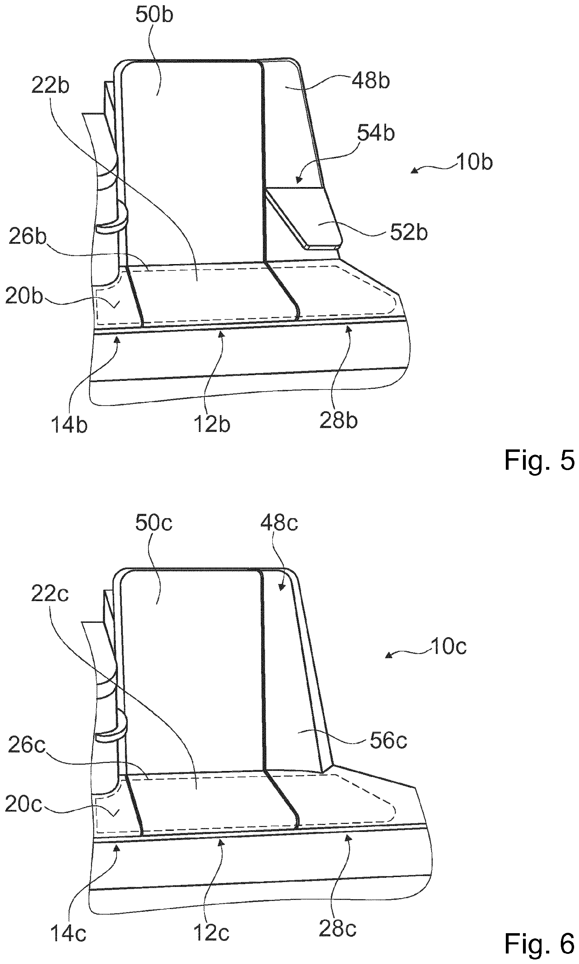

In den Figuren 5 bis 8 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 4, verwiesen werden kann. Zur Unterscheidung der Ausführungsbeispiele ist der Buchstabe a den Bezugszeichen des Ausführungsbeispiels in Fig. 1 bis 4 nachgestellt. In den Ausführungsbeispielen der Figuren 5 bis 8 ist der Buchstabe a durch die Buchstaben b bis e ersetzt.

Die Figur 5 zeigt ein zweites Ausführungsbeispiel eines erfindungsgemäßen Flugzeugsitzsystems. Das Flugzeugsitzsystem umfasst einen ersten Fluggastsitzbereich 10b. Der erste Fluggastsitzbereich 10b ist im Wesentlichen gleich ausgebildet wie der erste Fluggastsitzbereich aus dem ersten Ausführungsbeispiel aus den Figuren 1 bis 4 und wird deshalb im Folgenden lediglich grob beschrieben. Entsprechende Merkmale des Fluggastsitzbereichs 10b können aus der Beschreibung des ersten Ausführungsbeispiels übernommen werden. Der erste Fluggastsitzbereich 10b umfasst einen ersten Fluggastsitz 36b. Der Fluggastsitz 36b umfasst eine Sitzbodeneinheit 22b und eine Rückenlehneneinheit 50b. Der Fluggastsitzbereich 10b weist einen Sitzbereich 12b auf. Der Sitzbereich 12b wird von dem Fluggastsitz 36b gebildet. Der Fluggastsitzbereich 10b weist einen ersten Bankbereich 14b auf. Der erste Bankbereich 14b ist in einer senkrecht zur Sitzrichtung ausgerichteten Querrichtung 18b an einer ersten Seite des Sitzbereichs 12b angeordnet. Der Fluggastsitzbereich 10b weist einen zweiten Bankbereich 28b aus. Der zweite Bankbereich 28b ist auf einer dem ersten Bankbereich 14b gegenüberliegenden Seite des Sitzbereichs 12b bzw. der Sitzbodeneinheit 22b angeordnet. Der weitere Bankbereich 28b weist einen Rückenlehnenbereich 48b auf. Der Rückenlehnenbereich 48b schließt unmittelbar an die Rückenlehneneinheit 50b des Sitzbereichs 12b an. Der zweite Bankbereich 28b unterscheidet sich von dem zweiten Bankbereich des ersten Ausführungsbeispiels. Der Rückenlehnenbereich 48b des zweiten Bankbereichs 28b umfasst eine schwenkbare Abdeckung 52b. Die schwenkbare Abdeckung 52b ist zwischen einem eingeklappten Zustand und einem ausgeklappten Zustand verschwenkbar. In dem eingeklappten Zustand ist die schwenkbare Abdeckung 52b an den Rückenlehnenbereich 48b angeklappt. In einem ausgeklappten Zustand ist die schwenkbare Abdeckung 52b von dem Rückenlehnenbereich 48b weggeklappt und bildet eine Armlehne 54b aus. Die schwenkbare Abdeckung 52b steht dabei in einem Winkel von etwa 90 Grad von dem Rückenlehnenbereich 48b ab. Die schwenkbare Abdeckung 52b, die zur Bildung der Armlehne 54b vorgesehen ist, ist dabei in dem eingeklappten und ausgeklappten Zustand arretierbar.

Die Figur 6 zeigt ein drittes Ausführungsbeispiel eines erfindungsgemäßen Flugzeugsitzsystems. Das Flugzeugsitzsystem umfasst einen ersten Fluggastsitzbereich 10c. Der erste Fluggastsitzbereich 10c ist im Wesentlichen gleich ausgebildet wie der erste Fluggastsitzbereich aus dem ersten Ausführungsbeispiel aus den Figuren 1 bis 4 und wird deshalb im Folgenden lediglich grob beschrieben. Entsprechende Merkmale des Fluggastsitzbereichs 10c können aus der Beschreibung des ersten Ausführungsbeispiels übernommen werden. Der erste Fluggastsitzbereich 10c umfasst einen ersten Fluggastsitz 36c. Der Fluggastsitz 36c umfasst eine Sitzbodeneinheit 22c und eine Rückenlehneneinheit 50c. Der Fluggastsitzbereich 10c weist einen Sitzbereich 12c auf. Der Sitzbereich 12c wird von dem Fluggastsitz 36c gebildet. Der Fluggastsitzbereich 10c weist einen ersten Bankbereich 14c auf. Der erste Bankbereich 14c ist in einer senkrecht zur Sitzrichtung ausgerichteten Querrichtung 18c an einer ersten Seite des Sitzbereichs 12c angeordnet. Der Fluggastsitzbereich 10c weist einen zweiten Bankbereich 28c aus. Der zweite Bankbereich 28c ist auf einer dem ersten Bankbereich 14c gegenüberliegenden Seite des Sitzbereichs 12c bzw. der Sitzbodeneinheit 22c angeordnet. Der weitere Bankbereich 28c weist einen Rückenlehnenbereich 48c auf. Der Rückenlehnenbereich 48c schließt unmittelbar an die Rückenlehneneinheit 50c des Sitzbereichs 12c an. Der zweite Bankbereich 28c unterscheidet sich von dem zweiten Bankbereich des ersten Ausführungsbeispiels. Der Rückenlehnenbereich 48c des zweiten Bankbereichs 28c weist eine schräge Polsterung 56c auf. Die schräge Polsterung 56c ist dem Sitzbereich 12c zugewandt. Eine dem Sitzbereich 12c zugewandte Seite der schrägen Polsterung 56c ist dabei in Flugrichtung weiter hinten angeordnet als eine dem Sitzbereich 12c abgewandte Seite der schrägen Polsterung 56c.

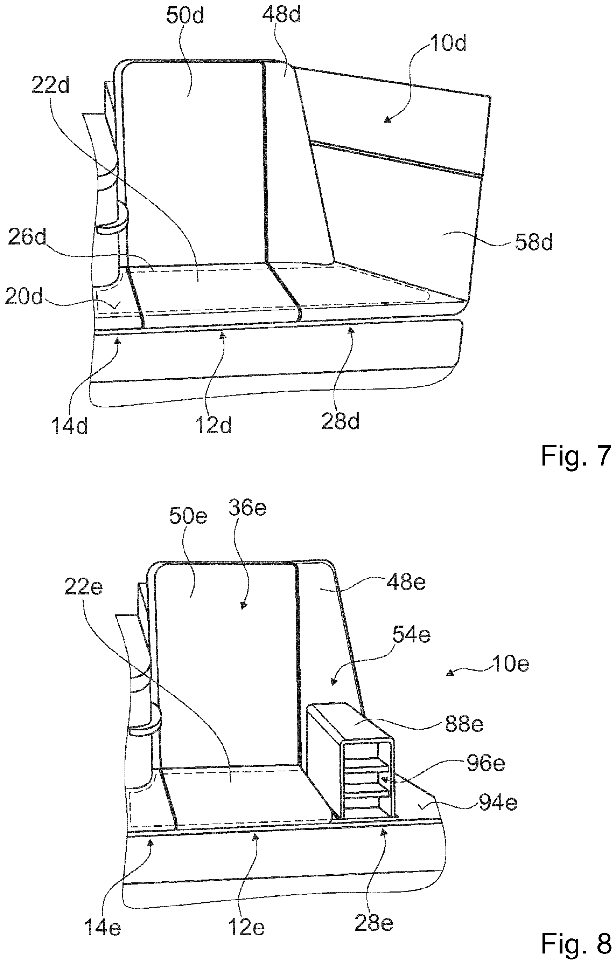

Die Figur 7 zeigt ein viertes Ausführungsbeispiel eines erfindungsgemäßen Flugzeugsitzsystems. Das Flugzeugsitzsystem umfasst einen ersten Fluggastsitzbereich 10d. Der erste Fluggastsitzbereich 10d ist im Wesentlichen gleich ausgebildet wie der erste Fluggastsitzbereich aus dem ersten Ausführungsbeispiel aus den Figuren 1 bis 4 und wird deshalb im Folgenden lediglich grob beschrieben. Entsprechende Merkmale des Fluggastsitzbereichs 10d können aus der Beschreibung des ersten Ausführungsbeispiels übernommen werden. Der erste Fluggastsitzbereich 10d umfasst einen ersten Fluggastsitz 36d. Der Fluggastsitz 36d umfasst eine Sitzbodeneinheit 22d und eine Rückenlehneneinheit 50d. Der Fluggastsitzbereich 10d weist einen Sitzbereich 12d auf. Der Sitzbereich 12d wird von dem Fluggastsitz 36d gebildet. Der Fluggastsitzbereich 10d weist einen ersten Bankbereich 14d auf. Der erste Bankbereich 14d ist in einer senkrecht zur Sitzrichtung ausgerichteten Querrichtung 18d an einer ersten Seite des Sitzbereichs 12d angeordnet. Der Fluggastsitzbereich 10d weist einen zweiten Bankbereich 28d auf. Der zweite Bankbereich 28d ist auf einer dem ersten Bankbereich 14d gegenüberliegenden Seite des Sitzbereichs 12d bzw. der Sitzbodeneinheit 22d angeordnet. Der weitere Bankbereich 28d weist einen Rückenlehnenbereich 48d auf. Der Rückenlehnenbereich 48d schließt unmittelbar an die Rückenlehneneinheit 50d des Sitzbereichs 12d an. Der Fluggastsitzbereich 10d umfasst eine gepolsterte Wandung 58d, die den Fluggastsitzbereich 10d an einer dem Sitzbereich 12d abgewandten Seite des zweiten Bankbereichs 28d abschließt. Die gepolsterte Wandung 58d schließt den Fluggastsitzbereich 10d an einem gangabgewandten Ende ab. Die gepolsterte Wandung 58d weist dabei eine gleiche Höhe auf wie der Rückenlehnenbereich 48d des zweiten Bankbereichs 28d.

Figur 8 zeigt ein fünftes Ausführungsbeispiel eines erfindungsgemäßen Flugzeugsitzsystems. Das Flugzeugsitzsystem umfasst einen ersten Fluggastsitzbereich 10e. Der erste Fluggastsitzbereich 10e ist im Wesentlichen gleich ausgebildet wie der erste Fluggastsitzbereich aus dem ersten Ausführungsbeispiel aus den Figuren 1 bis 4 und wird deshalb im Folgenden lediglich grob beschrieben. Entsprechende Merkmale des Fluggastsitzbereichs 10e können aus der Beschreibung des ersten Ausführungsbeispiels übernommen werden. Der erste Fluggastsitzbereich 10e umfasst einen ersten Fluggastsitz 36e. Der Fluggastsitz 36e umfasst eine Sitzbodeneinheit 22e und eine Rückenlehneneinheit 50e. Der Fluggastsitzbereich 10e weist einen Sitzbereich 12e auf. Der Sitzbereich 12e wird von dem Fluggastsitz 36e gebildet. Der Fluggastsitzbereich 10e weist einen ersten Bankbereich 14e auf. Der erste Bankbereich 14e ist in einer senkrecht zur Sitzrichtung ausgerichteten Querrichtung 18e an einer ersten Seite des Sitzbereichs 12e angeordnet. Der Fluggastsitzbereich 10e weist einen zweiten Bankbereich 28e auf. Der zweite Bankbereich 28e ist auf einer dem ersten Bankbereich 14e gegenüberliegenden Seite des Sitzbereichs 12e bzw. der Sitzbodeneinheit 22e angeordnet. Der weitere Bankbereich 28e weist einen Rückenlehnenbereich 48e auf. Der Rückenlehnenbereich 48e schließt unmittelbar an die Rückenlehneneinheit 50e des Sitzbereichs 12e an. Der Bankbereich 28e weist eine Armlehne 88e auf. Die Armlehne 88e ist als ein Teil des Bankbereichs 28e ausgebildet. Die Armlehne 88e ist in den Bankbereich 28e integriert. In einem eingefahrenen Zustand bildet die Armlehne 88e eine Bankoberfläche 94e des Bankbereichs 28e aus. In dem eingefahrenen Zustand ist die Armlehne 88e in den Bankbereich 28e eingefahren. In einem ausgefahrenen Zustand erstreckt sich die Armlehne 88e von der Bankoberfläche 94e des Bankbereichs 28e aus nach oben von der Bankoberfläche 94e weg. In dem ausgefahrenen Zustand kann ein in dem Fluggastsitzbereich 10e sitzender Passagier einen Arm auf der Armlehne 88e ablegen. Zum Verfahren zwischen dem eingefahrenen Zustand und dem ausgefahrenen Zustand weist der Bankbereich 28e eine nicht näher dargestellte Linearführungsvorrichtung auf. Über die Linearführungsvorrichtung ist die Armlehne 88e an den Bankbereich 28 angebunden. An einer vorderen Seite, die dem Rückenlehnenbereich 48e abgewandt ist, weist die Armlehne 88e ein Stauelement 96e auf. In dem Stauelement 96e können kleinere Utensilien, wie beispielsweise ein Handy, eine Brille oder Ähnliches, verstaut werden. Das Stauelement 96e ist dabei verschließbar ausgebildet. In Figur 8 ist die Armlehne 88e in dem ausgefahrenen Zustand gezeigt.

### Bezugszeichen

- 10: Fluggastsitzbereich
- 12: Sitzbereich
- 14: Bankbereich
- 16: Sitzrichtung
- 18: Querrichtung
- 20: Bankoberfläche
- 22: Sitzbodeneinheit
- 24: Flugzeugkabine
- 26: Liegefläche
- 28: Bankbereich
- 30: Bankelement
- 32: Flugrichtung
- 34: Tischvorrichtung
- 36: Fluggastsitz
- 38: Abdeckung
- 40: Stauraum
- 42: Fluggastsitzbereich
- 44: Sitzbereich
- 46: Konsolenbereich
- 48: Rückenlehnenbereich
- 50: Rückenlehneneinheit
- 52: Abdeckung
- 54: Armlehne
- 56: schräge Polsterung
- 58: Wandung
- 60: Kabinenboden
- 62: Sitzfläche
- 64: Rückenlehnenfläche
- 66: Flugzeuggang
- 68: Kante
- 70: Kante
- 72: Shellelement
- 74: Kante
- 76: Zusatzoberfläche
- 78: Konsolenbereich
- 80: Shellelement
- 82: Fluggastsitzbereich
- 84: Grundplatte
- 86: Zusatzplatte
- 88: Armlehne
- 90: Stauraum
- 92: Monitor
- 94: Bankoberfläche
- 96: Stauelement

## Patentansprüche

1. Flugzeugsitzsystem mit wenigstens einem Fluggastsitzbereich (10a; 10b; 10c; 10d), der wenigstens einen Sitzbereich (12a; 12b; 12c; 12d) und wenigstens einen Bankbereich (14a; 14b; 14c; 14d) aufweist, der dazu vorgesehen ist, dass ein Passagier während eines Flugs darauf sitzen kann, wobei der Bankbereich (14a; 14b; 14c; 14d) in einer, zumindest im Wesentlichen senkrecht zu einer Sitzrichtung (16a) ausgerichteten Querrichtung (18a) an einer Seite des Sitzbereichs (12a; 12b; 12c; 12d) angeordnet ist und eine Bankoberfläche (20a; 20b; 20c; 20d) aufweist, die in zumindest einem Betriebszustand mit zumindest einer Sitzbodeneinheit (22a; 22b; 22c; 22d) des Sitzbereichs (12a; 12b; 12c; 12d) eine Liegefläche (26a; 26b; 26c; 26d) ausbildet, wobei die Sitzbodeneinheit (22a; 22b; 22c; 22d) zu dem zumindest einen Bankbereich (14a; 14b; 14c; 14d) in Sitzrichtung (16a) nach hinten versetzt ist, wobei einen weiteren Fluggastsitzbereich (42a), der hinter dem einen Fluggastsitzbereich (10a) angeordnet ist und ebenfalls einen Sitzbereich (44a) ausbildet, der parallel zu der Sitzrichtung (16a) hinter dem einen Bankbereich (14a) angeordnet ist.

2. Flugzeugsitzsystem nach Anspruch 1, **dadurch gekennzeichnet, dass** ein hinteres Ende der Sitzbodeneinheit (22a; 22b; 22c; 22d) um wenigstens 100 mm zu einem hinteren Ende des einen Bankbereichs (14a; 14b; 14c; 14d) nach hinten versetzt ist.

3. Flugzeugsitzsystem nach Anspruch 1 oder 2, **dadurch gekennzeichnet, dass** der wenigstens eine Fluggastsitzbereich (10a; 10b; 10c; 10d) einen weiteren Bankbereich (28a; 28b; 28c; 28d) aufweist, der auf einer dem einen Bankbereich (14a; 14b; 14c; 14d) gegenüberliegenden Seite des Sitzbereichs (12a; 12b; 12c; 12d) angeordnet ist.

4. Flugzeugsitzsystem nach einem der vorhergehenden Ansprüche, **dadurch gekennzeichnet, dass** der wenigstens eine Fluggastsitzbereich (10a) wenigstens ein schwenkbar angeordnetes Bankelement (30a) aufweist, das an einem vorderen Ende der Bankbereiche (14a, 28a) und des Sitzbereichs (12a) angeordnet ist und in einer ausgeklappten Stellung die Liegefläche (26a) erweitert.

5. Flugzeugsitzsystem nach Anspruch 4, **dadurch gekennzeichnet, dass** das wenigstens eine schwenkbar angeordnete Bankelement (30a) sich in der Querrichtung (18a) über beide Bankbereiche (14a, 28a) und den Sitzbereich (12a) erstreckt.

6. Flugzeugsitzsystem nach einem der vorhergehenden Ansprüche, **dadurch gekennzeichnet, dass** der Fluggastsitzbereich (10a) schräg zu einer Flugrichtung (32a) ausgerichtet ist.

7. Flugzeugsitzsystem nach einem der vorhergehenden Ansprüche, **dadurch gekennzeichnet, dass** der Fluggastsitzbereich (10a) wenigstens eine Tischvorrichtung (34a) aufweist, die eine eingeklappte und eine ausgeklappte Stellung aufweist, wobei die Tischvorrichtung (34a) auch in der eingeklappten Stellung nutzbar ist.

8. Flugzeugsitzsystem nach Anspruch 7, **dadurch gekennzeichnet, dass** die Tischvorrichtung (34a) eine Quererstreckung aufweist, die größer ist als eine Quererstreckung des Sitzbereichs (12a).

9. Flugzeugsitzsystem nach einem der vorhergehenden Ansprüche, **dadurch gekennzeichnet, dass** der Sitzbereich (12a) von einem Fluggastsitz (36a) gebildet wird, der zwischen zumindest zwei Funktionsstellungen manuell verstellbar ist.

10. Flugzeugsitzsystem nach einem der vorhergehenden Ansprüche, **dadurch gekennzeichnet, dass** der Bankbereich (28a) zumindest eine schwenkbare Abdeckung (38a) aufweist, die in einem eingeklappten Zustand die Liegefläche (26a) teilweise ausbildet, und dass der Fluggastsitzbereich (10a) wenigstens einen Stauraum (40a) aufweist, der unterhalb des Bankbereichs (28a) angeordnet ist und in einem aufgeklappten Zustand der schwenkbaren Abdeckung (38a) zugänglich ist.

11. Flugzeugsitzsystem nach einem der vorhergehenden Ansprüche, **gekennzeichnet durch** einen Konsolenbereich (46a), der dem weiteren Fluggastsitzbereich (42a) zugeordnet ist, der in einem Bereich hinter dem einen Bankbereich (14a) angeordnet ist.

12. Flugzeugsitzsystem zumindest nach Anspruch 3, **dadurch gekennzeichnet, dass** der weitere Bankbereich (28a; 28b; 28c; 28d) einen Rückenlehnenbereich (48a; 48b; 48c; 48d) aufweist, der an eine Rückenlehneneinheit (50a; 50b; 50c; 50d) des Sitzbereichs (12a; 12b; 12c; 12d) anschließt.

13. Flugzeugsitzsystem zumindest nach Anspruch 12, **dadurch gekennzeichnet, dass** der Rückenlehnenbereich (48b) eine schwenkbare Abdeckung (52b) aufweist, die in einem ausgeklappten Zustand eine Armlehne (54b) ausbildet.

14. Flugzeugsitzsystem zumindest nach Anspruch 12, **dadurch gekennzeichnet, dass** der Rückenlehnenbereich (48c) eine schräge Polsterung (56c) aufweist, die dem Sitzbereich (12c) zugewandt ist.

15. Flugzeugsitzsystem nach einem der vorhergehenden Ansprüche, ***gekennzeichnet durch** eine gepolsterte Wandung (58d), die den Fluggastsitzbereich (10d) an einer dem Sitzbereich (12d) abgewandten Seite des Bankbereichs (28d) abschließt.

## Claims

1. Aircraft seating system with at least one flight passenger seating region (10a; 10b; 10c; 10d) comprising at least one seat region (12a; 12b; 12c; 12d) and at least one bench region (14a; 14b; 14c; 14d) which is configured for a passenger to sit on during a flight,
wherein the bench region (14a; 14b; 14c; 14d) is arranged to a side of the seat region (12a; 12b; 12c; 12d) in a transversal direction (18a) that is oriented at least substantially perpendicularly to a sitting direction (16a) and comprises a bench surface (20a; 20b; 20c; 20d) that forms in at least one operation state, together with at least one seat bottom unit (22a; 22b; 22c; 22d) of the seat region (12a; 12b; 12c; 12d), a lie-down surface (26a; 26b; 26c; 26d),
wherein the seat bottom unit (22a; 22b; 22c; 22d) is offset in the sitting direction (16a) rearwards relative to the at least one bench region (14a; 14b; 14c; 14d), the aircraft seating system comprising a further flight passenger seating region (42a), which is arranged behind the one flight passenger seating region (10a) and likewise forms a seat region (44a) that is arranged in parallel to the sitting direction (16a) behind the one bench region (14a).

2. Aircraft seating system according to claim 1,
**characterised in that** a rear end of the seat bottom unit (22a; 22b; 22c; 22d) is offset rearwards relative to a rear end of the one bench region (14a; 14b; 14c; 14d) by at least 100 mm.

3. Aircraft seating system according to claim 1 or 2,
**characterised in that** the at least one flight passenger seating region (10a; 10b; 10c; 10d) comprises a further bench region (28a; 28b; 28c; 28), which is arranged on a side of the seat region (12a; 12b; 12c; 12d) that is situated opposite the one bench region (14a; 14b; 14c; 14d).

4. Aircraft seating system according to one of the preceding claims,
**characterised in that** the at least one flight passenger seating region (10a) comprises at least one bench element (30a) which is arranged in a pivotable manner and is arranged on a front end of the bench regions (14a, 28a) and of the seat region (12a) and which in a deployed position extends the lie-down surface (26a).

5. Aircraft seating system according to claim 4,
**characterised in that** the at least one pivotably arranged bench element (30a) extends over both bench regions (14a, 28a) and the seat region (12a) in the transversal direction (18a).

6. Aircraft seating system according to one of the preceding claims,
**characterised in that** the flight passenger seating region (10a) is arranged at an angle to a flight direction (32a).

7. Aircraft seating system according to one of the preceding claims,
**characterised in that** the flight passenger seating region (10a) comprises at least one table device (34a) having a folded-back position and a deployed position, wherein the table device (34a) is also usable in the folded-back position.

8. Aircraft seating system according to claim 7,
**characterised in that** the table device (34a) has a transversal extension that is greater than a transversal extension of the seat region (12a).

9. Aircraft seating system according to one of the preceding claims,
**characterised in that** the seat region (12a) is realized by a flight passenger seat (36) that is manually adjustable between at least two functional positions.

10. Aircraft seating system according to one of the preceding claims,
**characterised in that** the bench region (28a) comprises at least one pivotable cover (38a), which in a folded-back state partially forms the lie-down surface (26a), and that the flight passenger seating region (10a) comprises at least one stowage space (40a) which is arranged underneath the bench region (28a) and is accessible in a folded-back state of the pivotable cover (38a).

11. Aircraft seating system according to one of the preceding claims,
**characterised by** a console region (46a) that is allocated to the further flight passenger seating region (42a) which is arranged in a region behind the one bench region (14a).

12. Aircraft seating system at least according to claim 3,
**characterised in that** the further bench region (28a; 28b; 28c; 28d) comprises a backrest region (48a; 48b; 48c; 48d) that is adjacent to a backrest unit (50a; 50b; 50c; 50d) of the seat region (12a; 12b; 12c; 12d).

13. Aircraft seating system at least according to claim 12,
**characterised in that** the backrest region (48b) comprises a pivotable cover (52b) which in a deployed state implements an armrest (54b).

14. Aircraft seating system at least according to claim 12,
**characterised in that** the backrest region (48c) comprises an oblique cushioning facing toward the seat region (12c).

15. Aircraft seating system according to one of the preceding claims,
**characterised by** a cushioned wall (58d) closing the flight passenger seating region (10d) off on a side of the bench region (28d) that faces away from the seat region (12d).

## Revendications

1. Système assise d'avion avec au moins une zone assise de passager d'avion (10a ; 10b ; 10c ; 10d) comprenant au moins une zone de siège (12a ; 12b ; 12c ; 12d) et au moins une zone de banc (14a ; 14b ; 14c ; 14d) prévue pour qu'un passager s'y puisse asseoir,
où la zone de banc (14a ; 14b ; 14c ; 14d) est disposée à un côté de la zone de siège (12a ; 12b ; 12c ; 12d) dans une direction transversale (18a) orientée au moins sensiblement perpendiculairement à une direction d'assise (16a) et comporte une superficie de banc (20a ; 20b ; 20c ; 20d) qui forme, en au moins un état d'opération, une surface de couchage (26a ; 26b ; 26c ; 26d) avec au moins unité fond de siège (22a ; 22b ; 22c ; 22d) de la zone de siège (12a ; 12b ; 12c ; 12d),
où l'unité fond de siège (22a ; 22b ; 22c ; 22d) est, par rapport à l'au moins une zone de banc (14a ; 14b ; 14c ; 14d), décalée vers l'arrière dans la direction d'assise (16a)
le système assise d'avion comprenant une zone assise de passager d'avion de plus (42a), qui est disposée derrière l'une zone assise de passager d'avion (10a) et aussi forme une zone de siège (44a) disposée en parallèle à la direction d'assise (16a) derrière l'une zone de banc (14a).

2. Système assise d'avion selon la revendication 1,
**caractérisé en ce qu'**une partie arrière de l'unité fond de siège (22a ; 22b ; 22c ; 22d) est décalée par rapport à une partie arrière de l'une zone de banc (14a ; 14b ; 14c ; 14d) par au moins 100 mm vers l'arrière.

3. Système assise d'avion selon la revendication 1 ou 2,
**caractérisé en ce que** l'au moins une zone assise de passager d'avion (10a ; 10b ; 10c ; 10d) comporte une zone de banc de plus (28a ; 28b ; 28c ; 28d) disposée sur un côté de la zone de siège (12a ; 12b ; 12c ; 12d) opposé à l'une zone de banc (14a ; 14b ; 14c ; 14d).

4. Système assise d'avion selon l'une quelconque des revendications précédentes,
**caractérisé en ce que** l'au moins une zone assise de passager d'avion (10a) comporte au moins un élément de banc (30a) qui est disposé d'une manière pivotable, qui est disposé à une partie antérieure des zones de banc (14a, 28a) et de la zone de siège (12a) et qui en état déployé élargisse la surface de couchage (26a).

5. Système assise d'avion selon la revendication 4,
**caractérisé en ce que** l'au moins un élément de banc (30a) disposé d'une manière pivotable s'étend dans la direction transversale (18a) au travers des deux zones de banc (14a, 28a) et de la zone de siège (12a).

6. Système assise d'avion selon l'une quelconque des revendications précédentes,
**caractérisé en ce que** la zone assise de passager d'avion (10a) est orientée obliquement à une direction de vol (32a).

7. Système assise d'avion selon l'une quelconque des revendications précédentes,
**caractérisé en ce que** la zone assise de passager d'avion (10a) comporte au moins un dispositif de table (34a) ayant une position rebattue et une position déployée, le dispositif de table (34a) étant utilisable aussi dans la position répliée.

8. Système assise d'avion selon la revendication 7,
**caractérisé en ce que** le dispositif de table (34a) comporte une extension transversale qui est plus large qu'une extension transversale de la zone de siège (12a).

9. Système assise d'avion selon l'une quelconque des revendications précédentes,
**caractérisé en ce que** la zone de siège (12a) est implémentée par un siège de passager d'avion (36a), qui est manuellement ajustable entre au moins deux positions fonctionnelles.

10. Système assise d'avion selon l'une quelconque des revendications précédentes,
**caractérisé en ce que** la zone de banc (28a) comporte au moins une couverture pivotable (38a) formant dans son état rebattu partiellement la surface de couchage (26a), et que la zone assise de passager d'avion (10a) comporte au moins un espace de rangement (40a), qui est agencé au-dessous de la zone de banc (28a) et est accessible en état déployé de la couverture pivotable (38a).

11. Système assise d'avion selon l'une quelconque des revendications précédentes,
**caractérisé par** une zone console (46a) allouée à la zone assise de passager d'avion de plus (42a), qui est disposée dans une région derrière l'une zone de banc (14a).

12. Système assise d'avion au moins selon la revendication 3,
**caractérisé en ce que** la zone de banc de plus (28a ; 28b, 28c ; 28d) comporte une zone de dossier (48a ; 48b ; 48c ; 48d) se joignante à une unité de dossier (50a ; 50b ; 50c ; 50d) de la zone de siège (12a ; 12b ; 12c ; 12d).

13. Système assise d'avion au moins selon la revendication 12,
**caractérisé en ce que** la zone de dossier (48b) comprend une couverture pivotable (52b) formant en état déployé un dossier (54b).

14. Système assise d'avion au moins selon la revendication 12,
**caractérisé en ce que** la zone de dossier (48c) comprend un rembourrage oblique (56c) tourné vers la zone de siège (12c).

15. Système assise d'avion selon l'une quelconque des revendications précédentes,
**caractérisé par** une paroi rembourrée (58d) terminant la zone assise de passager d'avion (10d) sur un côté de la zone de banc (28d) tourné vers la zone de siège (12d).
